# EUROPÄISCHE PATENTSCHRIFT

(11) **EP 0 784 767 B1**
(45) Veröffentlichungstag und Bekanntmachung des Hinweises auf die Patenterteilung: **29.07.1998**
(21) Anmeldenummer: 95936460.5
(22) Anmeldetag: 10.10.1995
(51) Int. Cl.: F16H 61/12, F16H 61/00

(54) **EINRICHTUNG ZUM STEUERN EINES CVT**
DEVICE FOR CONTROLLING A CVT
DISPOSITIF DE COMMANDE D'UNE TRANSMISSION CONTINUE VARIABLE

(30) Priorität: 13.10.1994 DE 4436506
(43) Veröffentlichungstag der Anmeldung: 23.07.1997
(73) Patentinhaber: ZF FRIEDRICHSHAFEN Aktiengesellschaft, 88038 Friedrichshafen (DE)
(72) Erfinder: KÖNIG, Hubert, D-88069 Tettnang (DE); STOLL, Hans, Peter, D-88094 Oberteuringen (DE); VORNDRAN, Ralf, D-88131 Bodolz (DE)
(86) Internationale Anmeldenummer: EP9503977
(87) Internationale Veröffentlichungsnummer: WO9612126

(56) Entgegenhaltungen:
- EP-A- 0 158 370
- EP-A- 0 487 129
- EP-A- 0 487 134
- EP-A- 0 498 210
- EP-A- 0 621 421
- DE-A- 4 234 103

## Beschreibung

Die Erfindung betrifft eine Einrichtung zum Steuern eines von einer Antriebseinheit angetriebenen CVT nach dem Oberbegriff des Anspruches 1.

Stufenlose Getriebe, nachfolgend CVT genannt, besitzen ein erstes Kegelscheibenpaar auf einer Antriebswelle und ein zweites Kegelscheibenpaar auf einer Abtriebswelle. Jedes Kegelscheibenpaar besteht aus einer in axialer Richtung feststehenden ersten Scheibe und einer in axialer Richtung verschiebbaren zweiten Kegelscheibe, nachfolgend Primärscheiben bzw. Sekundärscheibe genannt. Zwischen den Kegelscheibenpaaren läuft ein Umschlingungsorgan, zum Beispiel ein Schubgliederband. Die Verstellung der Primärscheibe bzw. Sekundärscheibe erfolgt durch ein Druckmedium. Hierzu steuert ein elektronisches Steuergerät über elektromagnetische Stellglieder und hydraulische Ventile das Druckniveau der Stellräume von Primärscheibe und Sekundärscheibe.

Aus der DE-OS 42 34 103 ist eine Vorrichtung zum Steuern des Druckes der Primärscheibe bekannt. Die Einrichtung umfaßt ein elektromagnetisch gesteuertes Primärventil und ein hydraulisches Sekundärventil. Das Primärventil wird von einem elektronischen Steuergerät angesteuert. Bei Leitungsunterbrechung vom elektronischen Steuergerät zum Primärventil geht die Einrichtung in Notfahrbetrieb. Hierbei wird das Druckniveau der Primärscheibe durch das Sekundärventil bestimmt. Die Stellung des Sekundärventils wiederum wird über eine mechanische Koppelung von der Primärscheibe bestimmt. Die Einrichtung hat den Nachteil, daß sie einen vollständigen Ausfall des elektronischen Steuergeräts nicht abdeckt.

Die Erfindung hat die Aufgabe, eine Einrichtung für einen Notfahrbetrieb eines CVT zu schaffen.

Die Aufgabe wird erfindungsgemäß dadurch gelöst, daß bei einem Ausfall des elektronischen Steuergeräts eine Notfahreinrichtung aktiviert ist, indem durch Mittel ein konstantes Druckverhältnis bzw. Kraftverhältnis Primärscheibe zu Sekundärscheibe eingestellt wird. Das Druckniveau im Verstellraum der Sekundärscheibe ist hierbei konstant. Über den Betrag dieses Kraftverhältnisses läßt sich festlegen, wie groß die Übersetzungsänderung des CVT vom Normalbetrieb zum Notfahrbetrieb ist. Die erfindungsgemäße Lösung bietet somit den Vorteil, daß der Übergang vom Normalbetrieb zum Notfahrbetrieb sicher ist. Ein Überdrehen bzw. ein zu starkes Absenken der Drehzahl der Antriebseinheit wird verhindert. Unter Notfahrbetrieb im Sinne der Erfindung ist der Zustand des CVT zu verstehen, bei dem keine Drehzahlregelung und keine Anpreßdruckregelung der Sekundärscheibe erfolgt.

In Ausgestaltung hierzu wird vorgeschlagen, daß die Mittel ein Primärventil und ein Sekundärventil sind. Diese erfindungsgemäße Lösung bietet den Vorteil, daß das CVT im Notfahrbetrieb nicht nur mit einer einzigen festen Übersetzung betrieben wird. Bei der erfindungsgemäßen Lösung variiert die Übersetzung des CVT in Abhängigkeit von dem abgegebenen Moment einer Antriebseinheit, zum Beispiel Brennkraftmaschine. Die variable Übersetzungsänderung ermöglicht im Notfahrbetrieb zum Beispiel ein sicheres Anfahren am Berg und eine verbesserte Fahrbarkeit (Driveability) mit einer hohen Endgeschwindigkeit. Ein weiterer Vorteil der erfindungsgemäßen Lösung besteht darin, daß bei dieser Notfahreinrichtung keine zusätzlichen Sensoren oder mechanischen Hebel verwendet werden müssen.
In einer weiteren Ausgestaltung der Erfindung wird vorgeschlagen, daß das Primär- und das Sekundärventil über ein erstes und zweites Notventil vorgesteuert sind und in einer Ausgestaltung hierzu, daß ein einziges elektromagnetisches Druckregelventil vorsteuernd auf das erste und zweite Notventil wirkt. Diese Lösung bietet den Vorteil, daß das erste und zweite Notventil gleichzeitig geschaltet werden, so daß Toleranzen und Signallaufzeiten der Druckregelventile nicht zur Wirkung kommen.

In den Zeichnungen ist ein Ausführungsbeispiel dargestellt.
Es zeigen:
- Fig. 1: ein Blockschaltbild eines elektronisch gesteuerten stufenlosen Getriebes;
- Fig. 2: ein Hydraulikschema Notfahreinrichtung und
- Fig. 3: ein Kennfeld.

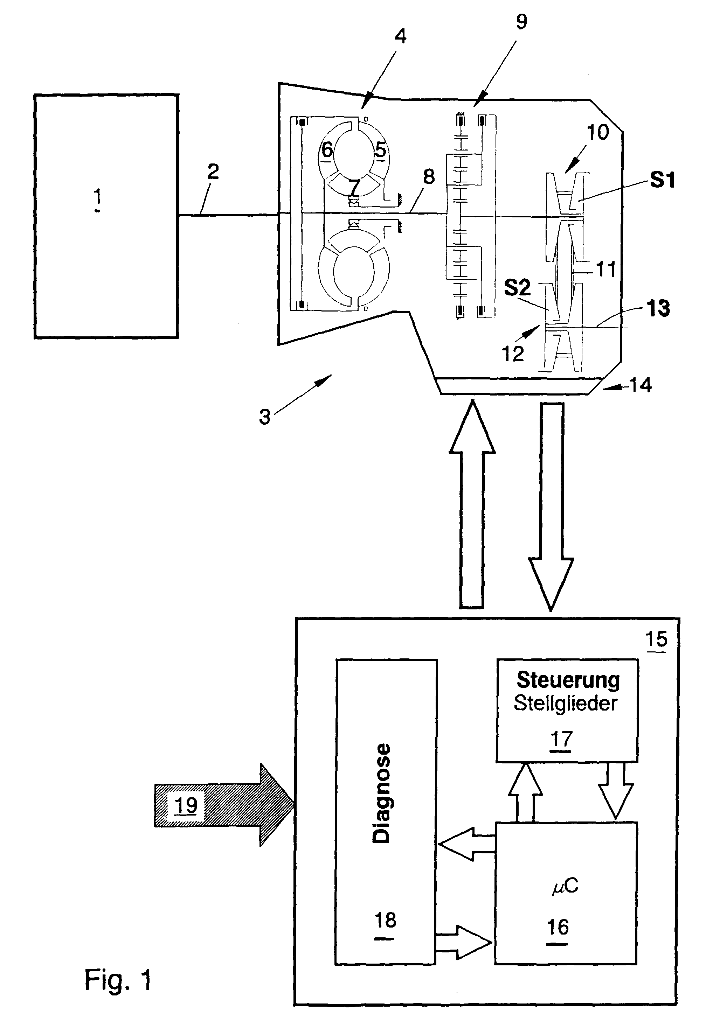

In Fig. 1 ist ein CVT 3 dargestellt. Das CVT 3 ist mit einer Antriebseinheit 1, zum Beispiel Brennkraftmaschine oder Elektromotor, über eine Antriebswelle 2 verbunden. Das CVT 3 besteht aus den Baugruppen: hydrodynamischer Wandler mit Überbrückungskupplung 4, Wendesatz 9, erstes Kegelscheibenpaar 10, zweites Kegelscheibenpaar 12, Umschlingungsorgan 11 und hydraulisches Steuergerät 14. Die Antriebswelle 2 treibt den hydrodynamischen Wandler 4 an. Dieser besteht bekanntermaßen aus einem Pumpenrad 5, einem Turbinenrad 6 und einem Leitrad 7. Wie in Fig. 1 dargestellt, kann sich zum hydrodynamischen Wandler 4 eine Wandlerüberbrückungskupplung befinden. Das Turbinenrad 6 bzw. die Wandlerüberbrückungskupplung sind mit einer Getriebeeingangswelle 8 verbunden. Die Getriebeeingangswelle 8 treibt einen Wendesatz 9 an. Über den Wendesatz 9 wird die Drehzahl der Getriebeeingangswelle 8 direkt auf das erste Kegelscheibenpaar 10 übertragen oder es erfolgt eine Drehrichtungsumkehr für Rückwärtsfahrt. Kernstück des CVT 3 ist das erste Kegelscheibenpaar 10, das zweite Kegelscheibenpaar 12 und das Umschlingungsorgan 11. Das erste Kegelscheibenpaar 10 besteht aus einer in axialer Richtung feststehenden ersten Kegelscheibe und einer in axialer Richtung verschiebbaren zweiten Kegelscheibe, der Primärscheibe S1. Das zweite Kegelscheibenpaar 12 besteht aus einer in axialer Richtung feststehenden ersten Kegelscheibe und einer in axialer Richtung verschiebbaren zweiten Kegelscheibe, der Sekundärscheibe S2. Zwischen diesen Kegelscheibenpaaren 10 und 12 läuft das Umschlingungsorgan 11, zum Beispiel ein Schubgliederband. Aufgrund der axialen Verschiebbarkeit der Primärscheibe S1 bzw. der Sekundärscheibe S2 ändert sich der Laufradius des Umschlingungsorgans 11. Hierdurch ändert sich die Drehzahl der Getriebeeingangswelle 8 bzw. die Übersetzung des CVT 3. Der Abtrieb erfolgt über die Abtriebswelle 13.
Das CVT 3 wird von einem elektronischen Steuergerät 15 mittels elektromagnetischer Stellglieder und hydraulischer Ventile gesteuert. Über diese nicht dargestellten Stellglieder werden die Kupplungen und Bremsen bzw. deren Druckverlauf gesteuert. Die elektromagnetischen Stellglieder und hydraulischen Ventile befinden sich in einem hydraulischen Steuergerät 14. Vom elektronischen Steuergerät 15 sind als Blöcke dargestellt: ein Micro-Controller 16, ein Funktionsblock Steuerung Stellglieder 17 und ein Funktionsblock Diagnose 18. Am elektronischen Steuergerät 15 sind Eingangsgrößen 19 angeschlossen. Die Eingangsgrößen 19 sind zum Beispiel:
- Signal einer Laststellung der Antriebseinheit (bei einer Brennkraftmaschine entspricht dies der Drosselklappenstellung),
- Drehzahl einer Getriebeeingangswelle,
- Drehzahl der Abtriebswelle und
- Temperatur eines Druckmediums.
Das elektronische Steuergerät 15 bestimmt aus den Eingangsgrößen 19 einen Betriebspunkt und stellt den dazugehörigen Drehzahlwert der Getriebeeingangswelle oder die Übersetzung des CVT 3 ein. Der Funktionsblock Diagnose 18 überprüft die Eingangsgrößen 19 auf Plausibilität. Tritt hierbei ein gravierender Fehler auf, so wird üblicherweise der Funktionsblock Steuerung Stellglieder über ein Sicherheitsrelais desaktiviert. Das CVT 3 geht somit in den Notfahrbetrieb. Unter Notfahrbetrieb im Sinne der Erfindung ist der Zustand des CVT zu verstehen, bei dem keine Drehzahlregelung und keine Anpreßdruckregelung der Sekundärscheibe erfolgt.

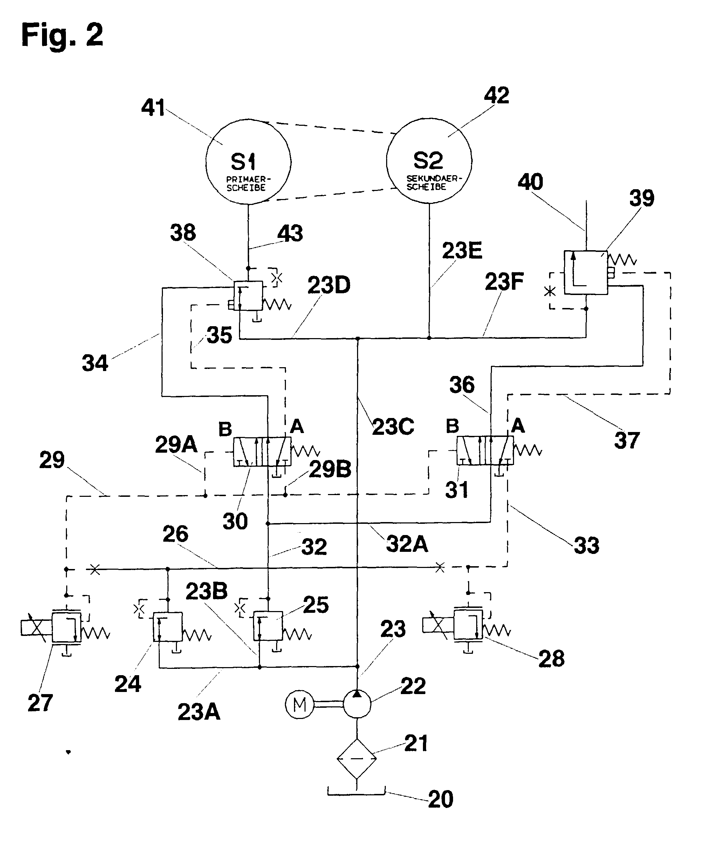

Fig. 2 zeigt ein Hydraulikschema der Notfahreinrichtung. Eine von der Antriebseinheit 1 oder vom Pumpenrad 5 angetriebene Pumpe 22 fördert aus einem Schmiermittelsumpf 20 über ein Filter 21 Druckmedium in die Leitung 23. Die Leitung 23 hat eine Abzweigung 23A zu einem ersten Druckreduzierventil 24 und eine Abzweigung 23B zu einem zweiten Druckreduzierventil 25. Des weiteren zweigt aus der Leitung 23 eine Leitung 23C ab, mit Abzweigungen 23D zu einem Primärventil 38, einer Abzweigung 23E zu einem Verstellraum 42 der Sekundärscheibe S2 und der Abzweigung 23F zu einem Sekundärventil 39. Das Druckniveau der Leitung 23 mit Abzweigungen 23A bis 23F wird durch das Sekundärventil 39, welches ein Druckbegrenzungsventil ist, eingestellt. Das erste Druckreduzierventil 24 stellt einen konstanten Druck, zum Beispiel 6 bar, in der Leitung 26 ein. Das zweite Druckreduzierventil 25 stellt ebenfalls einen konstanten Druck in der Leitung 32 und deren Abzweigung 32A ein. An die Leitung 26 ist ein erstes elektromagnetisches Druckregelventil 27 und ein zweites elektromagnetisches Druckregelventil 28 angeschlossen. Über die beiden Druckregelventile 27 und 28 läßt sich der Druck in der Leitung 29 bzw. 33 in Abhängigkeit des von dem elektronischen Steuergerät 15 eingestellten Stromwerts linear erhöhen bzw. reduzieren. Ein erstes Notventil 30 und ein zweites Notventil 31 sind mit der Leitung 29 bzw. deren Abzweigungen 29A und 29B verbunden. Die beiden Notventile können, wie dargestellt, als getrennte Bauteile ausgeführt als auch in einem Ventilgehäuse untergebracht sein. Das erste Druckregelventil 27 wirkt vorsteuernd über die Abzweigung 29A auf das erste Notventil 30 und über die Leitung 29 auf das zweite Notventil 31. Die beiden Notventile 30 und 31 besitzen eine erste Stellung A und eine zweite Stellung B. Das erste Notventil 30 ist über Leitungen 34 und 35 mit dem Primärventil 38 verbunden. Das Primärventil 38 ist ein vorgesteuertes Druckreduzierventil. Das zweite Notventil 31 ist über Leitungen 36 und 37 mit dem Sekundärventil 39 verbunden. Das Sekundärventil 39 ist ein Druckbegrenzungsventil für die Sekundärseite, Leitung 23 bzw. 23A bis 23F. Bei einem zu hohen Druckniveau in der Leitung 23 reduziert das Sekundärventil 39 das Druckniveau, indem das Druckmedium über die Leitung 40 den anderen Verbrauchern des CVT zusätzlich zugeführt wird. Das Primärventil 38 stellt über die Leitung 43 das Druckniveau des Verstellraumes 41 der Primärscheibe S1 ein. Das Umschlingungsorgan ist gestrichelt dargestellt.
Die Funktion der Anordnung ist folgendermaßen:
Dargestellt ist der Notfahrbetrieb. Dies bedeutet, daß das erste und zweite Druckregelventil 27 bzw. 28 stromlos sind. Hierdurch stellt sich in der Leitung 29 bzw. 33 gegenüber der Leitung 26 ein reduziertes Druckniveau von zum Beispiel 0,4 bar ein. Die Feder der beiden Notventile 30 und 31 ist so ausgelegt, daß die Federkraft größer ist als die Kraft aus diesem reduzierten Druck. Hierdurch werden die beiden Notventile, wie dargestellt, in die Stellung A umgeschoben. In der Stellung A sind die Leitungen 29B und 33 abgeschlossen. Von den Leitungen 32 und 32A herrscht somit ein Durchgang zu den Leitungen 34 und 36. Hierdurch liegt das konstante Druckniveau des zweiten Druckreduzierventils 25 als Vorsteuerdruck beim Primärventil 38 und Sekundärventil 39 an. Durch das Primärventil 38 und das Sekundärventil 39 wird ein konstantes Druckverhältnis in den Verstellräumen 41 bzw. 42 der Primärscheibe S1 und Sekundärscheibe S2 eingestellt. Das Druckverhältnis wird aus Versuchen ermittelt, zum Beispiel 16,5 bar primär zu 26,0 bar sekundär. Im Normalbetrieb befinden sich die beiden Notventile in der Stellung B. Hierdurch werden die Leitungen 34 bzw. 36 in den Tank entlüftet. Von der Leitung 29B besteht ein Durchgang zur Leitung 35. Von der Leitung 33 besteht ein Durchgang zur Leitung 37. Hierdurch ist der vom ersten Druckregelventil 27 eingestellte Druckwert vorsteuernd auf das Primärventil 38 bzw. der vom zweiten Druckregelventil 28 eingestellte Druckwert vorsteuernd auf das Sekundärventil 39. Durch das erste Druckregelventil 27 wird die Übersetzung des CVT eingestellt. Durch das zweite Druckregelventil 28 wird der Anpreßdruck der Sekundärscheibe eingestellt.

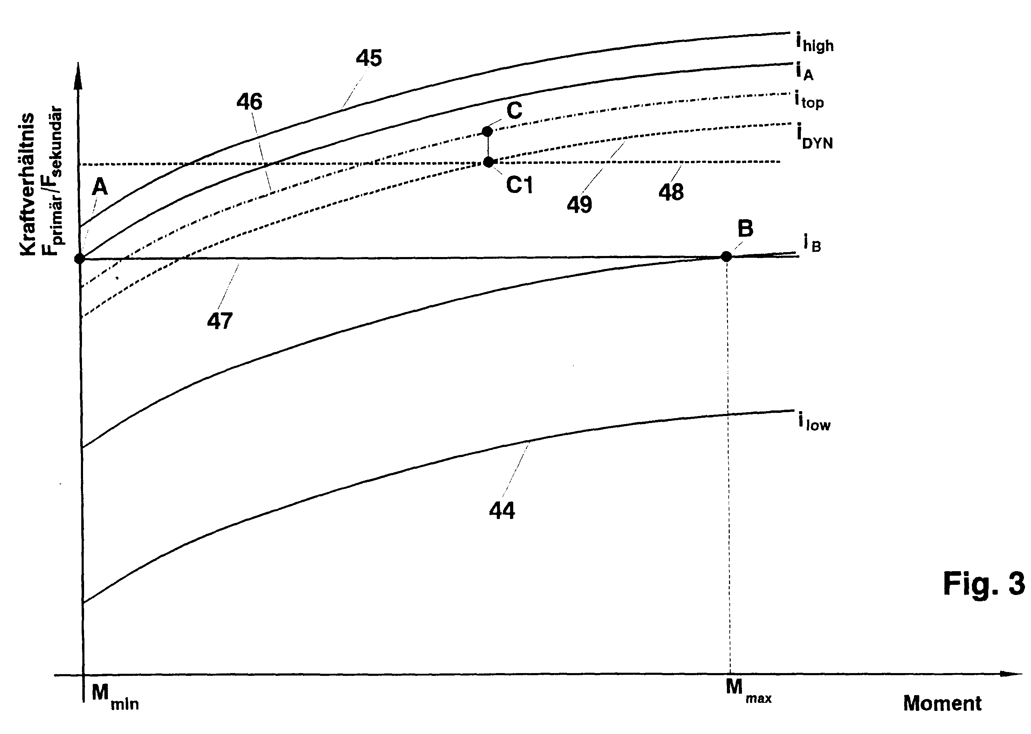

Fig. 3 zeigt ein Kennfeld. Auf der Abszisse ist ein Moment der Primärscheibe S1 abgetragen. Das Moment der Primärscheibe S1 berechnet sich aus dem von der Antriebseinheit 1 abgegebenen Moment mal der Übersetzung des hydrodynamischen Wandlers 4. Wird zum Beispiel als Antriebseinheit eine Brennkraftmaschine verwendet, so läßt sich bekanntermaßen aus den beiden Kenngrößen Einspritzzeit und Drehzahl der Brennkraftmaschine das abgegebene Moment berechnen. Auf der Ordinate aufgetragen ist das Kraftverhältnis. Kraftverhältnis ist der Quotient aus Kraft der Primärscheibe zur Kraft der Sekundärscheibe. Das Kennfeld zeigt in Abhängigkeit des Moments parabelförmige Kurvenzüge, die der Übersetzung des CVT entsprechen. Bezugszeichen 44 zeigt die niedrigste Übersetzung i_low, entsprechend dem niedrigsten Gang, und Bezugszeichen 45 die größte Übersetzung i_high, entsprechend dem größten Gang. Der Verstellbereich des CVT, d. h. der Bereich zwischen i_low und i_high, enthält unendlich viele parallel verschobene Parabelkurvenzüge. Als Beispiel hieraus ist mit Bezugszeichen 46 strichpunktiert eine Übersetzung i_top dargestellt. Die Übersetzung i_top wird üblicherweise so gewählt, daß ein mit einer Antriebseinheit und einem CVT 3 ausgerüstetes Fahrzeug die maximale Geschwindigkeit erreicht. Bezugszeichen 47 zeigt eine zur Abszisse parallel verschobene Linie eines statischen Kraftverhältnisses von Kraft der Primärscheibe S1 zur Kraft der Sekundärscheibe S2. Beim statischen Kraftverhältnis wird nur die Kraft aus der Wirkung des Druckmediums berücksichtigt. Dieses statische Kraftverhältnis gilt somit ausschließich für dynamisch druckausgeglichene Verstellräume 41 bzw. 42 der Primär- bzw. Sekundärscheibe. Bezugszeichen 48 zeigt ein parallel zur Abszisse verschobenes dynamisches Kraftverhältnis von Kraft der Primärscheibe S1 zur Kraft der Sekundärscheibe S2. Beim dynamischen Kraftverhältnis kommt zu der statischen Kraftkomponente noch eine dynamische Kraftkomponente hinzu. Bekanntermaßen verteilt sich das Druckmedium aufgrund der Zentrifugalkraft drehzahlabhängig in den beiden Verstellräumen 41 und 42. Hieraus resultiert eine zusätzliche axiale Kraftkomponente. Die Lage der Linie des dynamischen Kraftverhältnisses 48 ist hierdurch ebenfalls drehzahlabhängig. Das dynamische Kraftverhältnis ergibt sich somit bei dynamisch nicht druckausgeglichenen Verstellräumen 41 bzw. 42.
Die statische Kraft der Sekundärscheibe S2 wird so gewählt, daß das Umschlingungsorgan 11 das Moment sicher auf die Sekundärscheibe S2 übertragen kann, ohne daß hierbei Schlupf auftritt. Die an der Sekundärscheibe S2 eingestellte statische Kraft ist über den gesamten Bereich des Moments konstant. Ein weiteres Kriterium für den Wert dieses Kraftverhältnisses ist die Notwendigkeit, daß mit Übergang vom Normalbetrieb in den Notfahrbetrieb die Drehzahl der Antriebseinheit nicht so weit ansteigen darf, daß es zu einer Beschädigung der Antriebseinheit kommt bzw. es darf die Drehzahl der Antriebseinheit nicht so weit abgesenkt werden, daß die Antriebseinheit blockiert. Beim bevorzugten Ausführungsbeispiel sind die beiden Verstellräume 41 und 42 dynamisch nicht druckausgeglichen. Fährt zum Beispiel ein Fahrzeug mit Maximalgeschwindigkeit, also hohem Drehzahlniveau der Antriebseinheit, im Betriebspunkt C, so reduziert sich die Übersetzung von i_top mit Übergang in den Notfahrbetrieb auf die Übersetzung i_dyn, Bezugszeichen 49, des neuen Betriebspunktes Cl. Die Linie 47 hat einen Begrenzungspunkt A mit dazuhörigem Moment M_min und einen Begrenzungspunkt B mit dazugehörigem Moment M_max. Im Punkt A schneidet die Linie 47 die Übersetzungslinie i_A und im Punkt B schneidet die Linie 47 die Übersetzungslinie i_B. Im Notfahrbetrieb stellt sich nun in Abhängigkeit des Moments und des dynamischen Kraftverhältnisses die Übersetzung des CVT zwischen diesen beiden Begrenzungslinien i_A und i_B aufgrund des konstanten Kraftverhältnisses ein. In der Praxis ergibt sich zum Beispiel ein Übersetzungsbereich von 0,7 bis 1,6 für den Notfahrbetrieb.

In einer nicht dargestellten Erweiterung ist vorgesehen, daß die Stellung des zweiten Druckreduzierventils 25 von der Scheibenstellung der Sekundärscheibe S2 abhängig ist. Die Scheibenstellung kann zum Beispiel über eine mechanische Verbindung erkannt werden. Das Druckreduzierventil 25 beeinflußt in Abhängigkeit von der Scheibenstellung der Sekundärscheibe S2 den Sekundärdruck, Leitungen 23F und 23E, über das Sekundärventil 39. Ebenso kann der Primärdruck, Leitung 43, durch das Primärventil 38 beeinflußt werden.

Durch die Berücksichtigung der Scheibenstellung läßt sich somit das Druckverhältnis Scheibe 1/Scheibe 2 konstant halten, jedoch bezüglich des absoluten Druckniveaus in Abhängigkeit vom tatsächlichen Druckbedarf (übersetzungsabhängig) anpassen. Dadurch verbessert sich der Wirkungsgrad des Variators im Notprogramm.

### Bezugszeichen

- 1: Antriebseinheit
- 2: Antriebswelle
- 3: CVT
- 4: hydrodynamischer Wandler mit Überbrückungskupplung
- 5: Pumpenrad
- 6: Turbinenrad
- 7: Leitrad
- 8: Getriebeeingangswelle
- 9: Wendesatz
- 10: erstes Kegelscheibenpaar
- 11: Umschlingungsorgan
- 12: zweites Kegelscheibenpaar
- 13: Abtriebswelle
- 14: hydraulisches Steuergerät
- 15: elektronisches Steuergerät
- 16: Micro-Controller
- 17: Funktionsblock Steuerung Stellglieder
- 18: Funktionsblock Diagnose
- 19: Eingangsgrößen
- 20: Schmiermittelsumpf
- 21: Filter
- 22: Pumpe
- 23: Leitung
- 23A: Leitung
- 23B: Leitung
- 23C: Leitung
- 23D: Leitung
- 23E: Leitung
- 23F: Leitung
- 24: erstes Druckreduzierventil
- 25: zweites Druckreduzierventil
- 25.1: zweites Druckreduzierventil, scheibenstellungsabhängig
- 26: Leitung
- 27: erstes elektromagnetisches Druckregelventil
- 28: zweites elektromagnetisches Druckregelventil
- 29: Leitung
- 29A: Leitung
- 29B: Leitung
- 30: erstes Notventil
- 31: zweites Notventil
- 32: Leitung
- 32A: Leitung
- 33: Leitung
- 34: Leitung
- 35: Leitung
- 36: Leitung
- 37: Leitung
- 38: Primärventil
- 39: Sekundärventil
- 40: Leitung
- 41: Verstellraum Primärscheibe
- 42: Verstellraum Sekundärscheibe
- 43: Leitung
- 44: Übersetzung i_low
- 45: Übersetzung i_high
- 46: Übersetzung i_top
- 47: Linie statisches Kraftverhältnis,
Kraft Primär zu Kraft Sekundär
- 48: Linie dynamisches Kraftverhältnis,
Kraft Primär zu Kraft Sekundär
- 49: Übersetzung i_dyn

- S1: Primärscheibe
- S2: Sekundärscheibe

## Patentansprüche

1. Einrichtung zum Steuern eines von einer Antriebseinheit (1) angetriebenen CVT (3), mit jeweils einem Kegelscheibenpaar (10, 12) auf einer Antriebs- bzw. Abtriebswelle und einem Umschlingungsorgan (11), das zwischen den Kegelscheibenpaaren umläuft, das auf der Antriebswelle angeordnete Kegelscheibenpaar (10) besteht aus einer in axialer Richtung feststehenden Kegelscheibe und einer in axialer Richtung verschieblichen Primärscheibe (S1) mit Verstellraum (41), das auf der Abtriebswelle angeordnete Kegelscheibenpaar (12) besteht aus einer in axialer Richtung feststehenden Kegelscheibe und einer in axialer Richtung verschieblichen Sekundärscheibe (S2) mit Verstellraum (42), einem elektronischen Steuergerät (15), das über elektromagnetische Stellglieder und hydraulische Ventile das Druckniveau der Stellräume von Primär- (41) und Sekundärscheibe (42) bestimmt, dadurch **gekennzeichnet**, daß bei einem Ausfall des elektronischen Steuergeräts (15) eine Notfahreinrichtung aktiviert ist, indem durch Mittel ein konstantes Druckverhältnis bzw. Kraftverhältnis Primärscheibe (S1) zu Sekundärscheibe (S2) eingestellt wird, wobei das Druckniveau des Verstellraums (42) der Sekundärscheibe (S2) konstant ist.

2. Einrichtung nach Anspruch 1, dadurch **gekennzeichnet**, daß die Mittel ein Primärventil (38) und ein Sekundärventil (39) sind.

3. Einrichtung nach Anspruch 2, dadurch **gekennzeichnet** , daß das Primär- (38) und das Sekundärventil (39) über ein erstes und zweites Notventil (30, 31) vorgesteuert sind.

4. Einrichtung nach Anspruch 3, dadurch **gekennzeichnet**, daß ein elektromagnetisches Druckregelventil (27) vorsteuernd auf das erste und zweite Notventil (30, 31) wirkt.

5. Einrichtung nach dem Oberbegriff von Anspruch 1, dadurch **gekennzeichnet**, daß einer Pumpe (22) ein erstes und ein zweites Druckreduzierventil (24, 25) nachgeordnet sind (Leitung 23A, 23B), ein erstes und zweites elektromagnetisches Druckregelventil (27, 28) mit dem ersten Druckreduzierventil (24) (Leitung 26) verbunden sind, das erste elektromagnetische Druckregelventil (27) mit einem ersten und zweiten Notventil (30, 31) verbunden ist (Leitung 29, 29A, 29B), das erste Notventil (30) mit einem Primärventil (38) verbunden ist (Leitungen 34 und 35), das zweite Notventil (31) mit einem Sekundärventil (39) verbunden ist (Leitungen 36 und 37), das Primärventil (38) als auch das Sekundärventil (39) mit der Pumpe (22) verbunden sind (Leitung 23, 23C, 23D, 23F), hierbei über das Sekundärventil (39) das Druckniveau für den Verstellraum (42) der Sekundärscheibe (S2) bestimmt wird (Leitung 23E), das Primärventil (38) das Druckniveau des Stellraums (41) der Primärscheibe (S1) bestimmt (Leitung 43), das zweite Druckreduzierventil (25) mit den beiden Notventilen (30, 31) verbunden ist (Leitung 32 und 32A), die Schaltstellungen des ersten und zweiten Notventils (30, 31) durch das erste elektromagnetische Druckregelventil (27) bestimmt sind, so daß in einer ersten Stellung B der beiden Notventile (30, 31) das erste Druckregelventil (27) vorsteuernd auf das Primärventil (38) und das zweite Druckregelventil (28) vorsteuernd auf das Sekundärventil (39) wirken (Leitung 29, 29B, 35 bzw. 33, 37), in einer zweiten Stellung A der beiden Notventile (30, 31) das Druckniveau des zweiten Druckreduzierventils (25) vorsteuernd sowohl auf das Primärventil (38) als auch das Sekundärventil (39) wirkt.

6. Einrichtung nach Anspruch 5, dadurch **gekennzeichnet**, daß das zweite Druckreduzierventil (25) von der Scheibenstellung der Sekundärscheibe (S2) abhängig ist und das zweite Druckreduzierventil (25) das Druckniveau der beiden Verstellräume (41, 42) steuert.

## Claims

1. Device for controlling a CVT (3) driven by a drive unit (1), with a pair (10, 12) of cone pulleys in each case on a driving and a driven shaft respectively, and a wrap-around component (11) which revolves between the pairs of cone pulleys - the pair of cone pulleys (10) disposed on the driving shaft consisting of a cone pulley which is stationary in the axial direction and a primary pulley (S1) which is displaceable in the axial direction and has an adjusting clearance (41), and the pair of cone pulleys (12) disposed on the driven shaft consisting of a cone pulley which is stationary in the axial direction and a secondary pulley (S2) which is displaceable in the axial direction and has an adjusting clearance (42) - and with an electronic control apparatus (15) which determines the pressure level of the positioning clearances of the primary pulley (41) and secondary (pulley) via electromagnetic positioning members and hydraulic valves, **characterised in that**, in the event of failure of the electronic control apparatus (15), an emergency device is activated through the fact that means are used to set a constant primary-pulley- (S1)-to-secondary-pulley-(S2) pressure ratio or force ratio, the pressure level of the adjusting clearance (42) of the secondary pulley (S2) being constant.

2. Device according to claim 1, **characterised in that** the means used are a primary valve (38) and a secondary valve (39).

3. Device according to claim 2, **characterised in that** the primary valve (38) and the secondary valve (39) are precontrolled via a first and second emergency valve (30, 31).

4. Device according to claim 3, **characterised in that** an electromagnetic pressure-regulating valve (27) acts in a pre-controlling manner on the first and second emergency valve (30, 31).

5. Device according to the pre-characterising clause of claim 1, **characterised in that** a first and a second pressure-reducing valve (24, 25) are disposed downstream of a pump (22) (line 23A, 23B), a first and second electromagnetic pressure-regulating valve (27, 28) are connected to the first pressure-reducing valve (24) (line 26), the first electromagnetic pressure-regulating valve (27) is connected to a first and second emergency valve (30, 31) (line 29, 29A, 29B), the first emergency valve (30) is connected to a primary valve (38) (lines 34 and 35), the second emergency valve (31) is connected to a secondary valve (39) (lines 36 and 37), the primary valve (38) and also the secondary valve (39) are connected to the pump (22) (line 23, 23C, 23D, 23F), under these circumstances the pressure level for the adjusting clearance (42) of the secondary pulley (S2) is determined via the secondary valve (39) (line 23E), the primary valve (38) determines the pressure level of the positioning clearance (41) of the primary pulley (S1) (line 43), the second pressure-reducing valve (25) is connected to the two emergency valves (30, 31) (line 32 and 32A), the shifting positions of the first and second emergency valve (30, 31) are determined by the first electromagnetic pressure-regulating valve (27), so that, in a first position B of the two emergency valves (30, 31), the first pressure-regulating valve (27) acts in a pre-controlling manner on the primary valve (38) and the second pressure-regulating valve (28) acts in a pre-controlling manner on the secondary valve (39) (line 29, 29B, 35 and 33, 37 respectively), in a second position A of the two emergency valves (30, 31), the pressure level of the second pressure-reducing valve (25) acts in a pre-controlling manner both on the primary valve (38) and also on the secondary valve (39).

6. Device according to claim 5, **characterised in that** the second pressure-reducing valve (25) is dependent upon the pulley position of the secondary pulley (S2) and the second pressure-reducing valve (25) controls the pressure level of the two adjusting clearances (41, 42).

## Revendications

1. Dispositif pour la commande d'une transmission à réglage continu (CVT) (3) entraînée par une unité motrice (1) comportant une paire de disques coniques (10, 12) sur chaque arbre mené, respectivement arbre menant et un organe d'enroulement (11) qui tourne entre les paires de disques coniques, la paire de disques coniques (10) disposée sur l'arbre menant se composant d'un disque conique fixe dans le sens axial et d'un disque primaire (S1) mobile dans le sens axial, avec un espace de réglage (41), la paire de disques coniques (12) montée sur l'arbre mené se composant d'un disque conique fixe dans le sens axial et d'un disque secondaire (S2) mobile dans le sens axial, avec un espace de réglage (42), un appareil de commande électronique (15) qui définit par l'intermédiaire de vérins et soupapes hydrauliques le niveau de pression des espaces de réglage du disque primaire (41) et du disque secondaire (42), **caractérisé** en ce qu'en cas de défaillance de l'appareil de commande électronique (15), une installation de marche d'urgence est activée du fait que, par l'intermédiaire de moyens, un rapport de pression, respectivement un rapport de forces constant entre le disque primaire (S1) et le disque secondaire (S2) est établi, le niveau de pression de l'espace de réglage (42) du disque secondaire (S2) étant constant.

2. Dispositif selon la revendication 1, **caractérisé** en ce que les moyens sont une soupape primaire (38) et une soupape secondaire (39).

3. Dispositif selon la revendication 2, **caractérisé** en ce que la soupape primaire (38) et la soupape secondaire (39) sont soumises à une commande pilote par l'intermédiaire d'une première et deuxième soupape d'urgence (30, 31).

4. Dispositif selon la revendication 3, **caractérisé** en ce qu'un régulateur de pression électromagnétique (27) agit comme commande pilote sur la première et la deuxième soupape d'urgence (30, 31).

5. Dispositif selon le préambule de la revendication 1, **caractérisé** en ce qu'une première et une deuxième soupape réductrice (24, 25) sont montées en aval d'une pompe (22) (conduits 23A, 23B), un premier et un deuxième régulateur de pression électromagnétique (27, 28) étant reliés à la première soupape réductrice (24) (conduite 26), le premier régulateur de pression électromagnétique (27) étant relié à une première et deuxième soupape de secours (30, 31) (conduits 29, 29A, 29B), la première soupape d'urgence (30) étant reliée à une soupape primaire (38) (conduites 34 et 35), la deuxième soupape de secours (31) étant reliée à une soupape secondaire (39) (conduites 36 et 37), la soupape primaire (38) ainsi que la soupape secondaire (39) étant reliées à la pompe (22) (conduits 23, 23C, 23D, 23F), en ce qu'il est ainsi défini par l'intermédiaire de la soupape secondaire (39), le niveau de pression pour l'espace de réglage (42) du disque secondaire (S2) (conduite 23E), par l'intermédiaire de la soupape primaire (38), le niveau de pression de l'espace de réglage (41) du disque primaire (S1) (conduite 43), en ce que la deuxième soupape réductrice (25) est reliée aux deux soupapes d'urgence (30, 31) (conduites 32 et 32A), les positions de réglage de la première et deuxième soupape de secours (30, 31) étant définies par le premier régulateur de pression électromagnétique (27) de façon que dans une première position B des deux soupapes d'urgence (30, 31), le premier régulateur de pression (27) agissant comme commande pilote sur la soupape primaire (38) et le deuxième régulateur de pression (28) agissant comme commande pilote sur la soupape secondaire (39) (conduits 29, 29B, 35, respectivement 33, 37), et dans une deuxième position A des deux soupapes d'urgence (30, 31), le niveau de pression du deuxième réducteur de pression (25) agit comme commande pilote aussi bien sur la soupape primaire (38) que sur la soupape secondaire (39).

6. Dispositif selon la revendication 5, **caractérisé** en ce que la deuxième soupape réductrice (25) est assujettie à la position du disque secondaire (S2) et la deuxième soupape réductrice (25) pilote le niveau de la pression des deux espaces de réglage (41, 42).
